# EUROPEAN PATENT APPLICATION

(11) **EP 2 545 822 A1**
(43) Date of publication of application: **16.01.2013**
(21) Application number: 12175372.7
(22) Date of filing: 06.07.2012
(51) Int. Cl.: A47J 31/36

(54) **Assembly for making an infused drink**

(30) Priority: 12.07.2011 IT BS20110041 U
(71) Applicant: Capitani S.r.l., 22070 Solbiate (CO) (IT)
(72) Inventor: Capitani, Gionata, I-22070 Solbiate, Como (IT)
(74) Representative: Chimini, Francesco

(57) **Abstract**

An assembly for making an infused drink, comprises a capsule (10) containing an aromatic substance, said capsule having a tray-shaped body (12) made of paper and closed by a sealing film, and an infusion group (1) acting in conjunction with said capsule (10). The infusion group comprises a female infusor (30), defining an infusion chamber (32) suitable for receiving said capsule and a male infusor (40) suitable for hermetically sealing said infusion chamber. The infusion chamber (32) is shaped so as to form a shaped coupling without clearance with the capsule to reduce the deformation of the tray-shaped body (12) when it is traversed by the infusion liquid.

## Description

The present invention relates to an assembly of an infusion group and of a capsule containing an aromatic substance for making an infused drink, such as coffee, tea, herb teas, etc.

Machines are known of for making an infused drink comprising an infusion group acting in conjunction with a capsule containing an aromatic substance. The infusion group comprises two parts which can be moved towards each other so as to define an infusion chamber which the capsule is placed in. A first part, also referred as the female infusor, has an open cavity defining the infusion chamber suitable for receiving the capsule; a second part, also referred to as the male infusor, is commanded to translate towards the female infusor so as to seal tight the infusion chamber, perforate the capsule and inject an infusion liquid such as water therein.

Normally the capsules are made from rigid plastic material. It is evident how the use of a rigid plastic material poses various problems as regards the disposal of the used capsules, their production, the wrapping and packaging thereof, and the wear of the parts of the machine coming into contact with the capsule, in particular the perforation tips.

To resolve some of these drawbacks attempts have been made to produce a capsule in paper material. However the mere replacement of a capsule in plastic material with a similar capsule in paper has not led to the results hoped for, mainly on account of the fragility of the paper which is unable to withstand the pressure of the infusion liquid injected by the male infusor.

The aim of the present invention is to propose an assembly of an infusion group and a paper capsule able to overcome the drawbacks spoken of above.

Such purpose is achieved by an assembly according to claim 1.

The characteristics and advantages of the assembly according to the invention will be evident from the description given below, by way of a non-limiting example of one of its embodiments, according to the appended drawings. In said drawings:

- Figure 1 schematically represents an infusion group and a capsule, according to the invention, in an open position;

- Figure 2 schematically represents the group closed; and

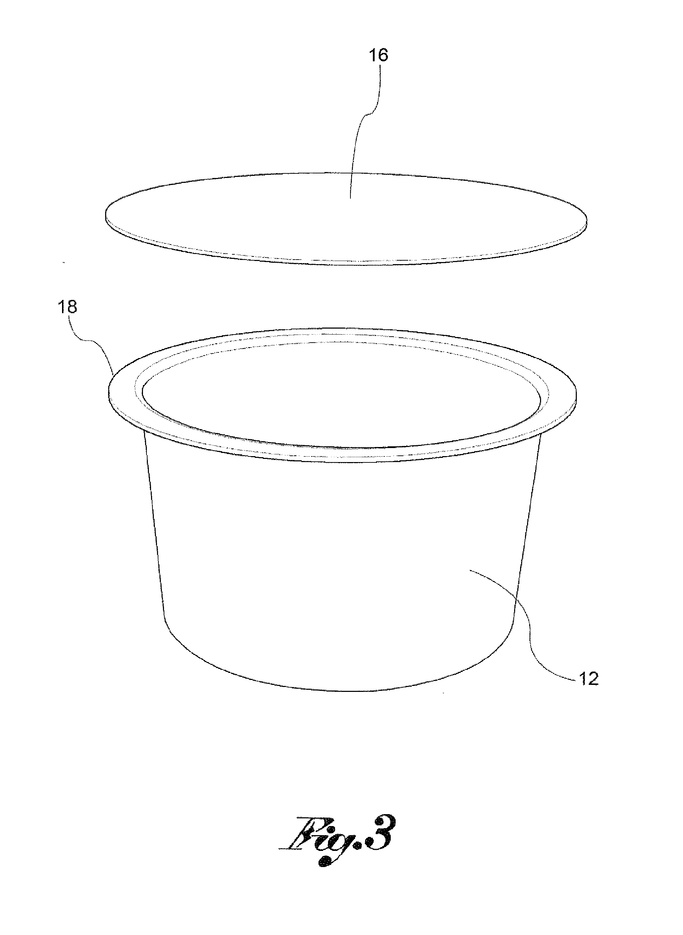

- Figure 3 is a perspective view of the capsule only.

With reference to the appended drawings, reference numeral 1 globally denotes an infusion group for the preparation of an infused drink. Said infusion group comprises a female infusor 30 and a male infusor 40, placed opposite each other. The female infusor 30 defines, on the side facing the male infusor, an infusion chamber 32 open towards said male infusor and suitable for receiving a capsule 10 containing an aromatic substance. The infusion chamber 32 is fluidically connected to dispenser means of the infused drink, for example extending from the end of the female infusor opposite the infusion chamber.

At least one of the infusors, such as the male infusor, is movable towards the other infusor by means of manual or motorised command means, so as to seal the infusion chamber 32 hermetically.

Moreover, the male infusor 40 is fitted with perforation means 46 suitable for perforating the capsule 10 and injecting an infusion liquid such as water, supplied to the male infusor, therein.

According to the invention, the capsule 10 has a substantially cylindrical or truncated cone tray-shaped body 12 in paper open at one end 14. A sealing film 16 is applied to said open end 14 of the tray-shaped body. Said sealing film 16 faces towards the male infusor 40 when the capsule is inserted in the infusion chamber 32 and is perforated by the perforation means 46.

Advantageously, the paper capsule 10 is coated with a film of plastic material, such as polyethylene or polyethylene terephthalate (PET), suitable for acting as a barrier to the oxygen to prevent oxidation of the aromatic substance contained therein. The paper material which the body 12 is made of, the sealing film 16 and the protective film may moreover be made in a biodegradable material.

Advantageously, the tray-shaped body 12 of the capsule is made by moulding, in a single piece, without welding or gluing.

The infusion chamber 32 is shaped so as to form a shaped coupling without clearance with the capsule 10 to reduce the deformation of the tray-shaped body 12 when traversed by the pressurised infusion liquid. Consequently, the absence of clearance or interstices between the walls delimiting the infusion chamber 32 and the tray-shaped body 12 of the capsule 10 means there is no space for the paper walls of the tray-shaped body 12 to be deformed as far as rupturing. In other words, the pressure exerted by the infusion liquid inside the capsule is discharged fully onto the rigid walls which delimit the infusion chamber 32.

According to one advantageous embodiment, the capsule and female infusor are made in such a way that the lateral dimension of the tray-shaped body 12 of the capsule 10 is actually slightly greater than that of the infusion chamber 32. Thanks to the deformability both of the paper wall of the tray-shaped body 12 and of the aromatic substance therein, the capsule is therefore compressible at least radially by the lateral wall 33 which defines the infusion chamber 32 following insertion of the capsule in said chamber. This permits a dual advantageous effect to be achieved. In the first place, the capsule can be filled with the aromatic substance without the pressing thereof required by plastic capsules, thereby avoiding rupture of the paper walls.

In the second place, the slight compression exerted by the walls 33 which define the infusion chamber does not only make it possible to offset the reduced pressing of the aromatic substance but, even to achieve a compacting of the aromatic substance contained in the capsule better than that which can be achieved with a plastic capsule. As is known, the more the aromatic substance is compacted inside the capsule, the better the result of the infusion.

According to one embodiment, the axial dimension of the capsule 10 is also slightly greater than that of the infusion chamber 32, so that, for the reason stated above, the capsule is at least axially compressible following closure of the infusion chamber by the male infusor. This makes it possible to further improve the compacting of the aromatic substance contained in the capsule.

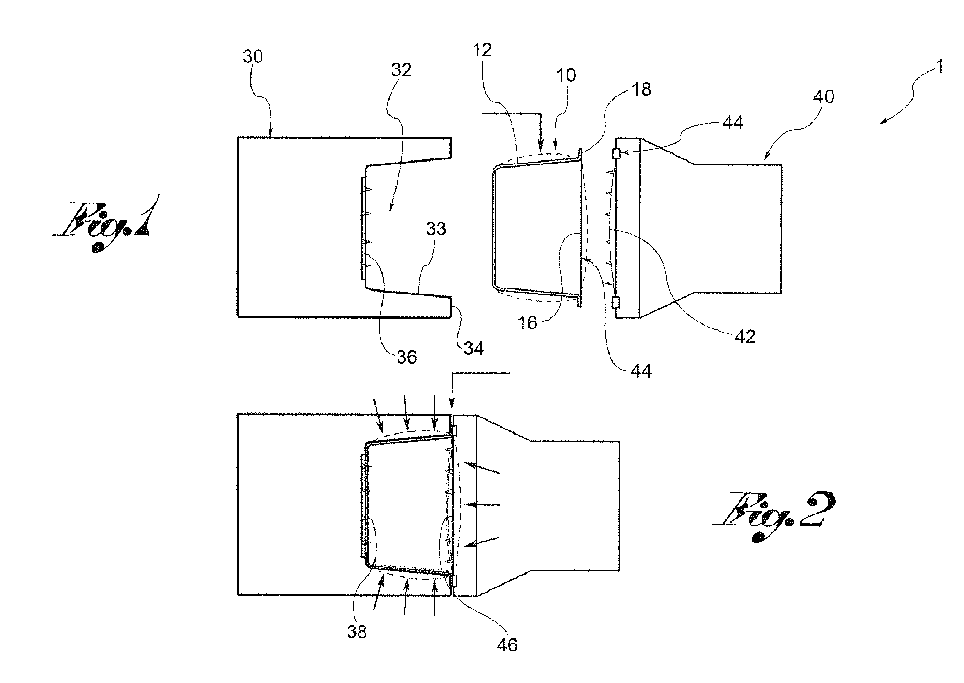

For example, the over-sizing of the body of the capsule in relation to the dimensions of the infusion chamber may be realised forming the side wall of the capsule body and one or both end walls thereof so that they are curved, that is to say convex. In figures 1 and 2, the continuous line used to represent the capsule shows the capsule with dimensions exactly the same as those of the infusion chamber 32; the dotted line has been used to show, in an intentionally exaggerated manner, the embodiment of the capsule with greater lateral and axial dimensions than those of the infusion chamber.

In a preferred embodiment, the front surface 42 of the male infusor 40 suitable for perforating the capsule, is convex or curved. In particular, said convex surface 42 has a diameter equal or less than that of the aperture of the infusion chamber 32, so that said convex surface 42 projects axially in relation to the plane defined by the front surface 34 delimiting the infusion chamber 32, therefore towards the inside of said chamber, to exert an axial compression of the capsule 10.

In one embodiment, the capsule 10 has a peripheral rim 18 which delimits the open end 14 and abuts against the front surface 34 of the female infusor which delimits the infusion chamber 32. The male infusor 40 has, on its front surface, a sealing ring 44 suitable for abutting against said peripheral rim 18 when the male infusor is in the closed position of the infusion chamber.

In one embodiment, the bottom 36 of the infusion chamber is fitted with perforation tips 38 suitable for perforating the bottom of the capsule body, in each of said perforation tips a through hole of the infused drink from the infusion chamber to at least one dispenser duct being made. The perforation means 46 joined to the male infusor may comprise a plurality of perforation tips 46 which extend from the front surface 42 and which are suitable for perforating the sealing film of the capsule.

Advantageously, both the perforating tips 38 of the female infusor and the perforating tips 46 of the male infusor are made in plastic material, given the low resistance proffered on the one side by the paper material of the bottom of the capsule and on the opposite side by the sealing film.

## Claims

1. Assembly for making an infused drink, comprising:
- a capsule (10) containing an aromatic substance, said capsule having a substantially cylindrical or truncated cone tray-shaped body (12) made from paper and open at one end (14), a sealing film (16) being applied to said open end of the tray-shaped body;
- an infusion group (1) acting in conjunction with said capsule (10), said infusion group comprising a female infusor (30), defining an infusion chamber (32) suitable for receiving said capsule and a male infusor (40) suitable for hermetically sealing said infusion chamber and for perforating the capsule on the side of the sealing film to realise the infusion of the aromatic substance with an infusion liquid,
said infusion chamber (32) being shaped so as to form a shaped coupling without clearance with the capsule to act against the deformation of the tray-shaped body (12) when it is traversed by the infusion liquid.

2. Assembly according to the previous claim, wherein the lateral dimension of the capsule (10) is slightly greater than that of the infusion chamber (32), the capsule being compressible at least radially by the lateral wall which defines the infusion chamber following insertion of the capsule in said chamber, so as to achieve a compacting of the aromatic substance contained in the capsule.

3. Assembly according to claim 1 or 2, wherein the axial dimension of the capsule (10) is slightly greater than that of the infusion chamber (32), the capsule being compressible at least axially following closure of the infusion chamber by the male infusor, so as to achieve a compacting of the aromatic substance contained in the capsule.

4. Assembly according to the previous claim, wherein one or both end walls of the capsule have a convex shape.

5. Assembly according to any of the previous claims, wherein the front surface (42) of the male infusor suitable for perforating the capsule has a convex shape.

6. Assembly according to any of the previous claims, wherein the capsule (10) has a peripheral rim (18) which delimits the open end (14) and abuts against a front surface (34) of the female infusor which delimits the infusion chamber (32).

7. Assembly according to the previous claim, wherein the male infusor (40) has a sealing ring (44) suitable for abutting against said peripheral rim (18) when the male infusor is in the closed position of the infusion chamber.

8. Assembly according to any of the previous claims, wherein the bottom (36) of the infusion chamber is fitted with perforation tips (38) suitable for perforating the bottom of the capsule body, in each of said perforation tips a through hole of the infused drink from the infusion chamber to at least one dispenser duct being made.

9. Assembly according to any of the previous claims, wherein the male infusor has a front surface (42) fitted with a plurality of perforation tips (46) suitable for perforating the sealing film of the capsule.

10. Assembly according to any of the previous claims, wherein the tray-shaped body (14) of the capsule is made by moulding, in a single piece, without welding or gluing.

11. Assembly according to any of the previous claims, wherein the capsule is coated with a film in plastic material, such as polyethylene or polyethylene terephthalate, suitable for preventing oxidation of the aromatic substance contained therein.
